(19) **Europäisches Patentamt**
**European Patent Office**
**Office européen des brevets**

(11) **EP 4 749 663 A1**

(12) **EUROPEAN PATENT APPLICATION**
published in accordance with Art. 153(4) EPC

(43) Date of publication:
**27.05.2026 Bulletin 2026/22**

(21) Application number: **24851892.0**

(22) Date of filing: **07.08.2024**

(51) International Patent Classification (IPC):
**H01B 1/06** (2006.01)    **C01G 25/00** (2006.01)
**C01G 35/00** (2006.01)

(52) Cooperative Patent Classification (CPC):
**C01G 25/00; C01G 35/00; H01B 1/06;** Y02E 60/10

(86) International application number:
**PCT/JP2024/028301**

(87) International publication number:
**WO 2025/033471 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131038**

(71) Applicants:
• **Sumitomo Chemical Company, Limited**
**Tokyo 103-6020 (JP)**

• **Kyoto University**
**Kyoto-shi, Kyoto 606-8501 (JP)**

(72) Inventors:
• **DOI, Atsunori**
**Niihama-shi, Ehime 792-8521 (JP)**
• **KAGEYAMA, Hiroshi**
**Kyoto-shi, Kyoto 606-8501 (JP)**

(74) Representative: **Vossius & Partner**
**Patentanwälte Rechtsanwälte mbB**
**Siebertstraße 3**
**81675 München (DE)**

(54) **ION CONDUCTIVE SUBSTANCE, SOLID ELECTROLYTE, AND BATTERY**

(57)    The present disclosure provides an ion conductive substance containing an alkali metal element, a metal element M that is at least one of a tetravalent metal element and a pentavalent metal element, a halogen element, a divalent metal element D, and an oxygen element, having a diffraction peak with a half width of 2.0 to 10° in a range where a 2θ angle is 5 to 20° in an X-ray diffraction chart obtained by measurement using CuKα rays at 25°C, and having a content of the divalent metal element D of 2.5 to 18 mol%.

**Fig.1**

## Description

### Technical Field

The present disclosure relates to an ion conductive substance, a solid electrolyte, and a battery.

### Background Art

In recent years, solid electrolytes have attracted attention as electrolytes used in electrochemical devices such as lithium ion batteries (Patent Literatures 1 to 4). Since the solid electrolytes are excellent in high-temperature durability, high voltage resistance, and the like as compared to conventional electrolytic solutions, it is considered that the solid electrolytes are useful for improving battery performance such as safety, high capacity, rapid charging and discharging, and pack energy density.

As described in Patent Literatures 1 to 4, halide solid electrolytes containing lithium and metal elements other than lithium (lithium-based halide solid electrolytes) are known as materials used for solid electrolytes of lithium ion batteries. The halide solid electrolytes have advantages not found in oxide-based or sulfide-based solid electrolytes, such as not requiring sintering because of high flexibility, and having high safety because of not releasing harmful hydrogen sulfide (H2S). In addition to lithium ion batteries, research on halide-based solid electrolytes using other alkali ions such as sodium and potassium, which are more abundant than lithium, is also proceeding.

### Citation List

### Patent Literature

[Patent Literature 1] WO 2020/070957 A
[Patent Literature 2] WO 2021/024876 A
[Patent Literature 3] WO 2021/024785 A
[Patent Literature 4] WO 2021/024783 A

### Summary of Invention

### Technical Problem

Here, hydrogen sulfide is known to be a gas highly dangerous to the human body, for example, having an inhalation LC50 of 9.23 ppm/4h for rats. Therefore, regarding sulfide-based solid electrolytes, there has been concern about adverse effects on the human body for some time. Regarding halide solid electrolytes, although it was conventionally recognized that such a risk is low, as a result of intensive studies by the present inventors, it has been found that the halide solid electrolytes react with moisture to release corrosive gases such as hydrogen halides. Therefore, when the halide solid electrolyte inside the battery reacts with moisture for some reason, corrosive gas is released, which may accelerate deterioration of a casing and the like.

The present disclosure has been made in view of the above circumstances, and an object thereof is to provide an ion conductive substance in which generation of harmful gas is suppressed. In addition, an object of the present disclosure is to provide a solid electrolyte including the ion conductive substance, and a battery.

### Solution to Problem

The present disclosure includes the following exemplary embodiments.

[1] An ion conductive substance containing an alkali metal element, a metal element M that is at least one of a tetravalent metal element and a pentavalent metal element, a halogen element, a divalent metal element D, and an oxygen element, having a diffraction peak with a half width of 2.0 to 10° in a range where a 20 angle is 5 to 20° in an X-ray diffraction chart obtained by measurement using CuKα rays at 25°C, and wherein a content of the divalent metal element D is 2.5 to 18 mol%.

[2] The ion conductive substance according to [1], wherein the divalent metal element D is at least one element selected from the group consisting of Mg, Ca, Sr, and Ba.

[3] The ion conductive substance according to [1] or [2], wherein the halogen element is chlorine.

[4] The ion conductive substance according to any one of [1] to [3], wherein a Li content is 15 to 35 mol%, an M content is 1 to 15 mol%, a halogen content is 30 to 60 mol%, and a divalent metal element D content is 2.5 to 18 mol%.

[5] A solid electrolyte including the ion conductive substance according to any one of [1] to [4].

[6] A battery including the solid electrolyte according to [5].

## Advantageous Effects of Invention

According to the present disclosure, it is possible to provide an ion conductive substance in which generation of harmful gas is suppressed. Further, according to the present disclosure, it is possible to provide a solid electrolyte including the ion conductive substance, and a battery.

## Brief Description of Drawings

[Fig. 1] FIG. 1 is a diagram illustrating X-ray diffraction charts of ion conductive substances of Examples 1 to 7 and Comparative Examples 1 and 2.

[Fig. 2] FIG. 2 is a diagram illustrating Arrhenius plots obtained for ion conductive substances of Examples 1 to 4.

## Description of Embodiments

The ion conductive substance of the present embodiment contains an alkali metal element, a metal element M that is at least one of a tetravalent metal element and a pentavalent metal element, a halogen element, a divalent metal element D, and an oxygen element, has a diffraction peak having a half width of 2.0 to 10° in a range where a $2\theta$ angle is 5 to 20° in an X-ray diffraction chart obtained by measurement using $CuK\alpha$ rays at 25°C, and has a content of the divalent metal element D of 2.5 to 18 mol%. The ion conductive substance according to the present embodiment may have a crystal structure constituted by the alkali metal element, the metal element M, the halogen element, the divalent metal element D, and the oxygen element. The ion conductive substance according to the present embodiment may be a single compound.

In the X-ray diffraction chart obtained by measurement using $CuK\alpha$ rays at 25°C, the diffraction peak in the range where the 20 angle is 5 to 20° corresponds to a crystal of the ion conductive substance and serves as an index for evaluating crystallinity. When the half width of the diffraction peak is equal to or less than an upper limit value, crystallinity is high, and the structure of the ion conductive substance becomes stable, so that generation of harmful gas (for example, corrosive gas and the like) is easily suppressed. On the other hand, when the half width of the diffraction peak is equal to or more than a lower limit value, a decrease in conductivity of alkali metal ions due to further increased crystallinity can be suppressed, and alkali metal ions (for example, lithium ions and the like) in the structure become easy to move by approaching an amorphous state. As a result, generation of harmful gas can be suppressed while suppressing a decrease in ionic conductivity.

The half width of the diffraction peak may be, for example, 2.0 to 9.0°, 2.1 to 7.5°, or 2.2 to 7.0°. Note that, in the present specification, the half width is a full width at half maximum (FWHM) unless otherwise specified.

The alkali metal element contained in the ion conductive substance of the present embodiment may be any of Li, Na, K, Rb, and Cs, but may contain at least one of Li, Na, and K, may contain at least one of Li and Na, may contain Li, and may be Li.

In the ion conductive substance of the present embodiment, the number of types of alkali metal elements may be one, or may be two or more. When the alkali metal element includes two or more types of alkali metal elements, a ratio of one type of alkali metal element among the alkali metal elements contained in the ion conductive substance may be, for example, 80 mol% or more, 90 mol% or more, or 95 mol% or more. The one type of alkali metal element (that is, the alkali metal element having the largest content ratio on a molar basis among the alkali metal elements contained in the ion conductive substance) may be any of Li, Na, and K, may be any one of Li and Na, and may be Li.

A content of the alkali metal element in the ion conductive substance may be, for example, 10 to 40 mol%, 15 to 35 mol%, or 17 to 33 mol% with respect to a total amount of atoms contained in the ion conductive substance.

The metal element M is at least one of a tetravalent metal element and a pentavalent metal element. The ion conductive substance may contain one or both of one or more types of tetravalent metal elements or one or more types of pentavalent metal elements.

The tetravalent metal element may contain at least one metal element selected from the group consisting of Ti, Zr, and Hf, and may contain Zr. The pentavalent metal element may contain at least one of Nb and Ta, and may contain Ta. The metal element M may contain at least one metal element selected from the group consisting of Ti, Zr, Hf, Nb, and Ta, and may contain at least one of Zr and Ta.

A content of the metal element M in the ion conductive substance may be, for example, 0.5 to 20 mol%, 1 to 15

3

mol%, or 1.5 to 12 mol% with respect to the total amount of atoms contained in the ion conductive substance.

When the ion conductive substance contains Zr, a content of Zr may be, for example, 70 mol% or more, 80 mol% or more, 85 mol% or more, or 90 mol% or more with respect to a total amount of the metal element M. When the ion conductive substance contains Zr, the content of Zr may be, for example, 99.9 mol% or less, 99 mol% or less, 98 mol% or less, 97 mol% or less, or 95 mol% or less with respect to the total amount of the metal element M. When the ion conductive substance contains Zr, the content of Zr may be adjusted within the above-described range, and may be, for example, 70 to 99.9 mol% or 80 to 99 mol% with respect to the total amount of the metal element M.

When the ion conductive substance contains Ta, a content of Ta may be, for example, 70 mol% or more, 80 mol% or more, 85 mol% or more, or 90 mol% or more with respect to the total amount of the metal element M. When the ion conductive substance contains Ta, the content of Ta may be, for example, 99.9 mol% or less, 99 mol% or less, 98 mol% or less, 97 mol% or less, or 95 mol% or less with respect to the total amount of the metal element M. When the ion conductive substance contains Ta, the content of Ta may be adjusted within the above-described range, and may be, for example, 70 to 99.9 mol% or 80 to 90 mol% with respect to the total amount of the metal element M.

The halogen element contained in the ion conductive substance of the present embodiment may be any of F, Cl, Br, and I, but may contain at least one of Cl, Br, and I, may contain at least one of Cl and Br, and may contain Cl. The ion conductive substance may contain only one type of halogen element, but may contain two or more types of halogen elements.

A content of the halogen element in the ion conductive substance may be, for example, 25 to 65 mol%, 30 to 60 mol%, 32 to 55 mol%, or 35 to 50 mol% with respect to the total amount of atoms contained in the ion conductive substance. A content of chlorine in the ion conductive substance may be, for example, 50 mol% or more, 60 mol% or more, 70 mol% or more, 80 mol% or more, 90 mol% or more, or 95 mol% or more with respect to a total amount of the halogen element.

The ion conductive substance contains the divalent metal element D. The divalent metal element D has high affinity with a halogen element such as Cl, and suppresses desorption of the halogen element when the ion conductive substance comes into contact with moisture, or suppresses generation of hydrogen halide by binding the generated halogen element.

Examples of the divalent metal element D include alkaline earth metals, Zn, and the like. The ion conductive substance may contain one or two or more types of divalent metal elements D. When the divalent metal element D is an alkaline earth metal, it is preferable to include an element belonging to a higher period among alkaline earth metals from the viewpoint of further suppressing generation of hydrogen halide. The divalent metal element D may contain at least one element selected from Mg, Ca, Sr, and Ba, may contain at least one element selected from Mg, Sr, and Ba, may contain Mg, and more preferably contains at least one of Sr and Ba.

By including a predetermined amount or more of the divalent metal element D in the ion conductive substance, generation of hydrogen halide can be further suppressed. A content of the divalent metal element D in the ion conductive substance may be, for example, 2.8 to 16 mol%, 3 to 15 mol%, 5 to 15 mol%, 6 to 15 mol%, 6.5 to 15 mol%, or 7 to 14.5 mol% with respect to the total amount of atoms contained in the ion conductive substance.

A content of the oxygen element in the ion conductive substance may be, for example, 3 to 30 mol%, 5 to 25 mol%, 8 to 22 mol%, 10 to 20 mol%, or 12 to 20 mol% with respect to the total amount of atoms contained in the ion conductive substance.

The ion conductive substance of the present embodiment may further contain a dopant element X. The dopant element X may be an element capable of forming a tetrahedral structure $XO_4$ with four oxygens, and specifically, may contain at least one of P and S. The dopant element X may contain S.

A content of the dopant element X in the ion conductive substance may be, for example, 0.05 to 5 mol%, 0.1 to 3 mol%, 0.2 to 2 mol%, or 0.3 to 1.5 mol% with respect to the total amount of atoms contained in the ion conductive substance.

The content of the dopant element X in the ion conductive substance may be, for example, 50 mol% or less, 1 to 40 mol%, 5 to 35 mol%, or 10 to 30 mol% of the content of the metal element M. The content of the dopant element X in the ion conductive substance may be, for example, 40 mol% or less, 30 mol% or less, or 25 mol% or less of the content of the metal element M.

The ion conductive substance may further contain a metal element M2 which is a metal element other than divalent, tetravalent, and pentavalent metal elements. Examples of the metal element M2 include monovalent metal elements (excluding alkali metal elements), trivalent metal elements, and hexavalent or higher metal elements.

Examples of the monovalent metal element include Ag and the like. Examples of the trivalent metal element include Sc, Y, La, Ce, Pr, Nd, Pm, Sm, Eu, Gd, Tb, Dy, Ho, Er, Yb, Lu, Al, Ga, In, Sb, Bi, and the like.

A content of M2 may be, for example, 30 mol% or less, 20 mol% or less, 15 mol% or less, or 10 mol% or less with respect to a total amount of the metal element M and the metal element M2 contained in the ion conductive substance. The content of M2 may be, for example, 0.1 mol% or more, 1 mol% or more, 2 mol% or more, 2.5 mol% or more, 3 mol% or more, or 5 mol% or more with respect to the total amount of the metal element M and the metal element M2 contained in the ion conductive substance. The content of M2 may be adjusted within the above-described range, and may be, for example, 0.1 to 30 mol% or 1 to 20 mol% with respect to the total amount of the metal element M and the metal element M2 contained in the ion conductive substance.

The ion conductive substance of the present embodiment may contain a compound represented by the following Composition Formula (1) (also referred to as an alkali metal-containing halide), and may be a compound represented by the following Composition Formula (1).

$$A_\alpha M_\beta X_\gamma D_\kappa Z_\delta E_\eta O_\varepsilon \cdot \cdot \cdot \qquad (1)$$

(In the formula, A is an alkali metal element, M is the above-described tetravalent metal element M, X is the above-described dopant element X, D is the above-described divalent metal element D, Z is a halogen element, and $1 \leq \alpha \leq 3$, $0.01 \leq \beta \leq 1.5$, $0 \leq \gamma \leq 0.5$, $2 \leq \delta \leq 5$, $0.1 < \kappa \leq 1.5$, and $0.5 \leq \varepsilon \leq 2$ are satisfied.)

In the above Composition Formula (1), $\alpha$ may be, for example, 1.1 to 2.5, 1.2 to 2.3, or 1.3 to 2.2. An upper limit and a lower limit for $\alpha$ can be arbitrarily combined.

In the above Composition Formula (1), $\beta$ may be, for example, 0.05 to 1.2 or 0.08 to 1. An upper limit and a lower limit for $\beta$ can be arbitrarily combined.

In the above Composition Formula (1), $\gamma$ may be, for example, 0.01 to 0.3, 0.02 to 0.2, or 0.08 to 0.15. An upper limit and a lower limit for $\gamma$ can be arbitrarily combined.

In the above Composition Formula (1), $\delta$ may be, for example, 2 to 4 or 2.1 to 3.8. An upper limit and a lower limit for $\delta$ can be arbitrarily combined.

In the above Composition Formula (1), $\varepsilon$ may be, for example, 0.7 to 1.8 or 0.8 to 1.5. An upper limit and a lower limit for $\varepsilon$ can be arbitrarily combined.

In the above Composition Formula (1), $\kappa$ may be, for example, 0.15 to 1.2 or 0.2 to 1. An upper limit and a lower limit for $\kappa$ can be arbitrarily combined.

In the above Composition Formula (1), E is an element other than A, M, X, D, Z, and O, and may be an element added or mixed in addition to essential elements. Examples of E include C, B, N, and the like.

In the above Composition Formula (1), $\eta$ may be, for example, 0 to 0.1, 0 to 0.01, or 0 to 0.001, and may be substantially 0.

Specific examples of the ion conductive substance according to the present embodiment include compounds having composition formulas such as $Li_2Zr_{0.5}Mg_{0.5}Cl_3O$, $Li_2Zr_{0.75}Mg_{0.25}Cl_{3.5}O$, $Li_2Zr_{0.1}Mg_{0.9}Cl_{2.2}O$, $Li_{2.1}Zr_{0.5}Mg_{0.5}O_3O(SO_4)_{0.1}$, $Li_2Zr_{0.25}Sr_{0.75}Cl_{2.5}O$, $Li_2Zr_{0.5}Ba_{0.5}Cl_3O$, and $Li_{1.4}Ta_{0.5}Mg_{0.5}Cl_{3.5}O_{1.4}$.

A method for producing the ion conductive substance of the present embodiment is not particularly limited, and examples thereof include a production method including a step of performing ball milling on raw materials.

The raw materials are not particularly limited, and may be compounds containing any of an alkali metal element, a metal element M, a halogen element, a divalent metal element D, and an oxygen element. The raw materials are selected so that the ion conductive substance has a target composition. The raw materials may arbitrarily contain the metal element M2, the dopant element X, and the like. For example, examples of an alkali metal source include alkali metal halides, alkali metal oxides, alkali metal peroxide salts, and the like. Examples of a metal element M source include halides of the metal element M. Examples of a divalent metal element D source include halides of the divalent metal element D. Examples of a metal element M2 source include halides of the metal element M2. The dopant element X source may be a compound such as a salt of an $XO_4$ ion and an alkali metal. The raw materials are preferably mixed before performing the ball milling, and may be mixed under an inert atmosphere (for example, Ar atmosphere or the like).

Conditions for the ball milling are not particularly limited, but can be set to 10 to 100 hours at a rotation speed of 200 to 700 rpm. A grinding time may be, for example, 1 to 72 hours, 12 to 60 hours, or 20 to 60 hours.

By performing the ball milling for the above-described time, respective raw materials are sufficiently mixed, and a mechanochemical reaction is promoted, so that it is possible to improve ionic conductivity of a compound to be obtained.

Balls used for the ball milling are not particularly limited, but zirconia balls can be used. A size of the balls to be used is not particularly limited, but balls of 2 mm to 10 mm can be used.

Annealing does not have to be performed on a product (ion conductive substance) obtained by performing the ball milling. That is, it is preferable that the production method does not include an annealing step for the product obtained by performing the ball milling. When annealing is performed, crystallites grow and become coarse, and the above-described effects may not be obtained. Examples of the annealing as described above include heating the product after the ball milling at 100°C or higher, 150°C or higher, or 200°C or higher.

The ion conductive substance of the present embodiment can be used, for example, as a material for electrochemical devices such as a capacitor and a battery. Examples of such a material include a material of an electrolyte. The electrolyte may be a solid electrolyte. Examples of the battery include batteries such as a lithium ion battery and a sodium ion battery, which are charged and discharged by movement of alkali metal ions between a positive electrode and a negative electrode. In addition, the ion conductive substance of the present embodiment may be used as an electrode material, and may be contained in a positive electrode or a negative electrode of a battery together with an active material.

Hereinafter, the battery of the present embodiment will be described using a lithium ion battery as an example. The lithium ion battery includes a positive electrode, a negative electrode, and an electrolyte (solid electrolyte) disposed between the positive electrode and the negative electrode. The ion conductive substance of the present embodiment may be contained in the electrolyte of the lithium ion battery.

The positive electrode of the lithium ion battery is not particularly limited, and may contain a positive electrode active material, and may contain a conductive additive, a binder, and the like as necessary. The positive electrode may be obtained by forming a layer containing these materials on a current collector.

Examples of the positive electrode active material include a lithium-containing composite metal oxide containing lithium (Li) and at least one transition metal selected from the group consisting of V, Cr, Mn, Fe, Co, Ni, and Cu. Examples of such a lithium composite metal oxide include $LiCoO_2$, $LiNiO_2$, $LiMn_2O_4$, $Li_2MnO_3$, $LiNi_xMn_yCo_{1-x-y}O_2$ [0 < x + y < 1], $LiNi_xCo_yAl_{1-x-y}O_2$ [0 < x + y < 1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, $Li_2MnSiO_4$, and the like. Examples of the positive electrode active material containing an alkali metal element other than lithium include those obtained by substituting lithium of the lithium composite metal oxide with another alkali metal element.

The negative electrode of the lithium ion battery is not particularly limited, and may contain a negative electrode active material, and may contain a conductive additive, a binder, and the like as necessary. Examples of the negative electrode active material can include single elements such as Li, Si, P, Sn, Si-Mn, Si-Co, Si-Ni, In, and Au, as well as alloys or composites containing these elements, carbon materials such as graphite, and substances in which lithium ions are intercalated between layers of the carbon materials.

A material of the current collector is not particularly limited, and may be, for example, a single metal element such as Mg, Ti, Fe, Co, Ni, Cu, Zn, Pd, Pt, Ag, Au, Al, In, or Ge, or an alloy.

A shape of the electrolyte (solid electrolyte) disposed between the positive electrode and the negative electrode may be layered. The solid electrolyte may have a plurality of solid electrolyte layers. For example, a configuration having a sulfide solid electrolyte layer in addition to the solid electrolyte layer containing the ion conductive substance of the present embodiment may be adopted. A configuration having a sulfide solid electrolyte layer between the solid electrolyte containing the ion conductive substance of the present embodiment and the negative electrode may be adopted.

The sulfide solid electrolyte is not particularly limited, and examples thereof include $Li_6PS_5Cl$, $Li_2S$-$PS_5$, $Li_{10}GeP_2S_{12}$, $Li_{9.6}P_3S_{12}$, $Li_{9.54}Si_{1.74}P_{1.44}S_{11.7}Cl_{0.3}$, $Li_3PS_4$, and the like. Examples of the solid electrolyte containing an alkali metal element other than lithium include those obtained by substituting lithium of the specific examples of the solid electrolyte with another alkali metal element.

Examples

(Example 1)

Ball Mill

In an argon atmosphere having a dew point of -70°C or lower (hereinafter, referred to as a dry argon atmosphere), $Li_2O$, $ZrCl_4$, and $MgCl_2$ were weighed so as to have a composition (charging composition) shown in Table 1, thereby preparing raw materials.

The raw materials were put in a zirconia pot having a volume of 50 mL for the following planetary ball mill machine, and 65 g of zirconia balls having a diameter of 4 mm were put therein. An ion conductive substance of Example 1 was obtained by performing a treatment to cause a mechanochemical reaction under conditions of 24 hours and 300 rpm. The ball mill was operated in a mode of being rotated for 10 minutes, followed by a 1-minute stop as an interval, while alternately switching clockwise and counterclockwise rotation directions.

Planetary ball mill machine: PM 400 manufactured by Verder Scientific GmbH & Co. KG

(Example 2)

An ion conductive substance was produced in the same manner as in Example 1 except that a blending ratio of the raw materials was changed so as to have the charging composition shown in Table 1.

(Example 3)

An ion conductive substance was produced in the same manner as in Example 1 except that the blending ratio of the raw materials was changed so as to have the charging composition shown in Table 1.

(Example 4)

An ion conductive substance was produced in the same manner as in Example 1 except that $Li_2O$, $ZrCl_4$, $MgCl_2$, and $LiSO_4$ were used as the raw materials, and the blending ratio of the raw materials was changed so as to have the charging composition shown in Table 1.

(Example 5)

An ion conductive substance was produced in the same manner as in Example 1 except that $Li_2O$, $ZrCl_4$, and $SrCl_2$ were used as the raw materials, and the blending ratio of the raw materials was changed so as to have the charging composition shown in Table 1.

(Example 6)

An ion conductive substance was produced in the same manner as in Example 1 except that $Li_2O$, $ZrCl_4$, and $BaCl_2$ were used as the raw materials, and the blending ratio of the raw materials was changed so as to have the charging composition shown in Table 1.

(Example 7)

An ion conductive substance was produced in the same manner as in Example 1 except that $Li_2O_2$, $TaCl_5$, and $MgCl_2$ were used as the raw materials, and the blending ratio of the raw materials was changed so as to have the charging composition shown in Table 1.

(Comparative Example 1)

An ion conductive substance was produced in the same manner as in Example 1 except that LiCl and $ZrCl_4$ were used as the raw materials, and the blending ratio of the raw materials was changed so as to have the charging composition shown in Table 1.

(Comparative Example 2)

An ion conductive substance was produced in the same manner as in Example 1 except that $Li_2O$, LiCl, $ZrCl_4$, and $MgCl_2$ were used as the raw materials, and the blending ratio of the raw materials was changed so as to have the charging composition shown in Table 1.

<Powder X-Ray Diffraction>

For the obtained ion conductive substance, a diffraction peak observed within a range of 10 to 20° at 2θ was evaluated by powder X-ray diffraction measurement at 25°C. The results are shown in Table 1. The powder X-ray diffraction measurement was performed under the following conditions. A half width of a peak was determined by removing a background signal and performing fitting.

Measuring apparatus: Ultima IV (manufactured by Rigaku Corporation)
X-ray generator: CuKα radiation source, voltage 40 kV, current 40 mA
X-ray detector: Scintillation counter or semiconductor detector
Measurement range: Diffraction angle 2θ = 5° to 80°
Scan speed: 4°/min

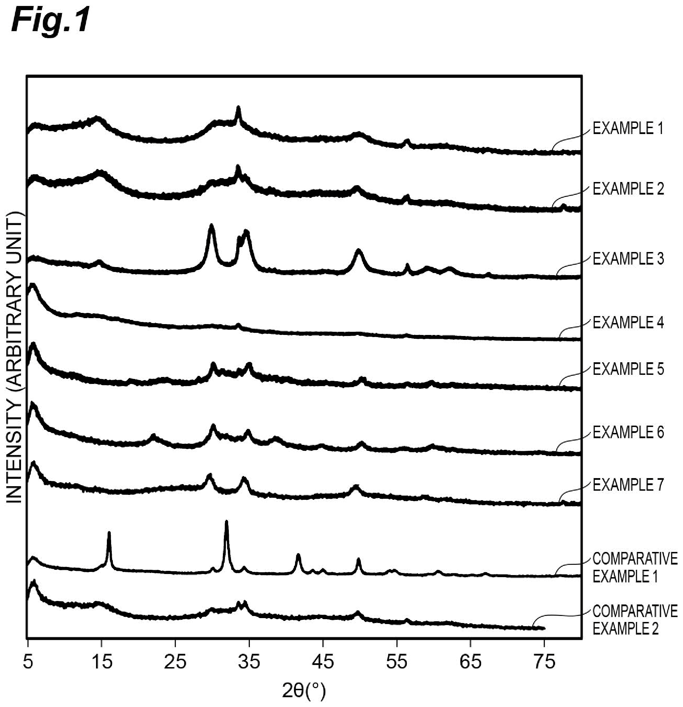

FIG. 1 is a diagram illustrating X-ray diffraction charts of the ion conductive substances of Examples 1 to 7 and Comparative Examples 1 and 2.

<Evaluation of Ionic Conductivity>

A press molding die including a frame mold, a lower punch, and an upper punch was prepared. Note that the frame mold was formed of insulating polycarbonate. Further, both the upper punch and the lower punch were formed of electron-conductive stainless steel, and were electrically connected to terminals of an impedance analyzer (SI 1260 manufactured by Solartron Analytical), respectively.

Using the press molding die, ionic conductivity of the ion conductive substance was measured by the following method. First, in a dry argon atmosphere, powder of the ion conductive substance was filled onto the lower punch inserted into a hollow portion of the frame mold from vertically below. Then, by pushing the upper punch into the hollow portion of the frame mold from above, a pressure of 370 MPa was applied to the powder of the ion conductive substance inside the press molding die. After the pressure was applied, the punches were tightened and fixed from above and below with a jig, and impedance of the ion conductive substance was measured by an electrochemical impedance measurement method using the impedance analyzer while the constant pressure was maintained.

From the impedance measurement results, a graph of a Cole-Cole plot was created. In the Cole-Cole plot, the real part of the impedance at a measurement point having the smallest absolute value of a phase of complex impedance was regarded as a resistance value to ion conduction of the ion conductive substance. The resistance value was used to calculate the ionic conductivity based on the following Formula (III).

$$\sigma = (R_{SE} \times S/t)\text{-}1 \cdots \text{(III)}$$

Here,

$\sigma$ is ionic conductivity, S is a contact area of the ion conductive substance with the upper punch (equal to a cross-sectional area of the hollow portion of the frame mold),
$R_{SE}$ is a resistance value of the solid electrolyte material in the impedance measurement, and
t is a thickness of the ion conductive substance when the pressure is applied.

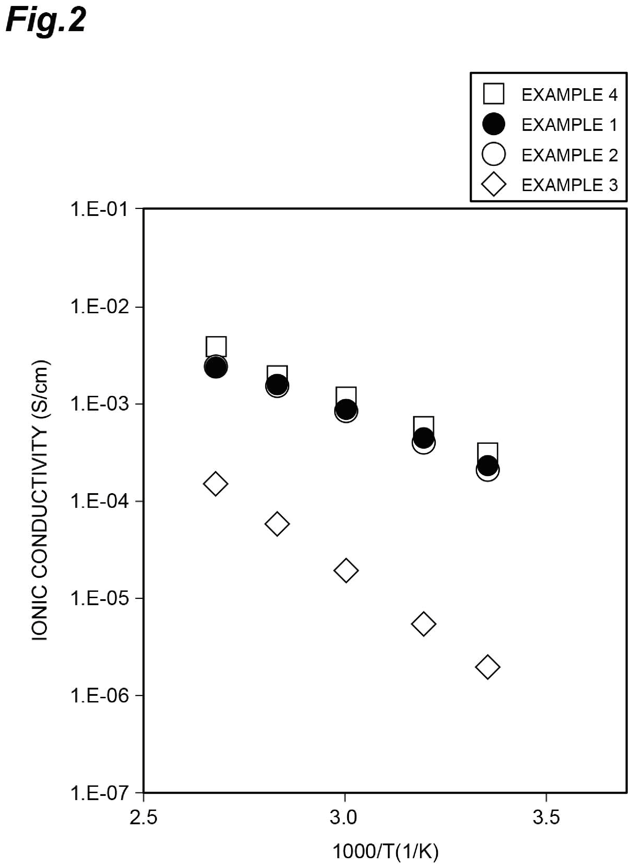

By the above method, the ionic conductivity of each of the ion conductive substances of Examples and Comparative Examples was measured at 5 points (25°C, 40°C, 60°C, 80°C, and 100°C) within a temperature range of 25°C to 100°C. The ionic conductivity at 25°C ($\sigma_{25°C}$) is shown in Table 1. FIG. 2 is a diagram illustrating Arrhenius plots obtained for the ion conductive substances of Examples 1 to 4. Note that, in FIG. 2, plots of Example 1 and Example 2 almost overlapped.

\<Measurement of Amount of Generated HCl Gas\>

0.2 g of each ion conductive substance was put into a 1 L glass bottle, and stored for 48 hours in an atmosphere of 25°C and 50% humidity. After 48 hours, an HCl concentration in the glass bottle was measured using a gas detector tube (hydrogen chloride detector tube No. 14L, manufactured by Gastec Corporation). The results are shown in Table 1.

[Table 1]

| | | Content of D (mol%) | Diffraction peak half width (°) | Ionic conductivity $\sigma_{25°C}$ (S/cm) | Amount of generated HCl gas (ppm) |
|---|---|---|---|---|---|
| | Charging Composition | | | | |
| Example 1 | $Li_2Zr_{0.5}Mg_{0.5}Cl_3O$ | 7.1 | 5.45 | $2.5\times10^{-4}$ | 750 |
| Example 2 | $Li_2Zr_{0.75}Mg_{0.25}Cl_{3.5}O$ | 3.3 | 5.9 | $2.2\times10^{-4}$ | 2000 |
| Example 3 | $Li_2Zr_{0.1}Mg_{0.9}Cl_{2.2}O$ | 14.5 | 3.26 | $1.9\times10^{-6}$ | 10 |
| Example 4 | $Li_{2.1}Zr_{0.5}Mg_{0.5}Cl_3O(SO_4)_{0.1}$ | 6.60 | 6.98 | $3.2\times10^{-4}$ | 500 |
| Example 5 | $Li_2Zr_{0.25}Sr_{0.75}Cl_{2.5}O$ | 11.5 | 2.32 | $4.2\times10^{-10}$ | <10 |
| Example 6 | $Li_2Zr_{0.5}Ba_{0.5}Cl_3O$ | 7.1 | 6.27 | $7.1\times10^{-6}$ | <10 |
| Example 7 | $Li_{1.4}Ta_{0.5}Mg_{0.5}Cl_{3.5}O_{1.4}$ | 6.8 | 2.99 | $2.4\times10^{-5}$ | 2500 |
| Comparative Example 1 | $Li_2ZrCl_6$ | 0 | 0.39 | - | 12000 |
| Comparative Example 2 | $Li_{2.2}Zr_{0.9}Mg_{0.1}Cl_4O$ | 1.2 | 3.51 | - | 5000 |

**Claims**

1.    An ion conductive substance containing an alkali metal element, a metal element M that is at least one of a tetravalent metal element and a pentavalent metal element, a halogen element, a divalent metal element D, and an oxygen element, having a diffraction peak with a half width of 2.0 to 10° in a range where a 2θ angle is 5 to 20° in an X-ray diffraction chart obtained by measurement using CuKα rays at 25°C, and
wherein a content of the divalent metal element D is 2.5 to 18 mol%.

2. The ion conductive substance according to claim 1, wherein the divalent metal element D contains at least one element selected from the group consisting of Mg, Ca, Sr, and Ba.

3. The ion conductive substance according to claim 1 or 2, wherein the halogen element contains chlorine.

4. The ion conductive substance according to claim 1 or 2, wherein a content of the alkali metal element is 15 to 35 mol%,

   a content of the metal element M is 1 to 15 mol%, and
   a content of the halogen element is 30 to 60 mol%.

5. A solid electrolyte comprising the ion conductive substance according to claim 1 or 2.

6. A battery comprising the solid electrolyte according to claim 5.

# Fig.1

## Fig.2

## INTERNATIONAL SEARCH REPORT

| International application No. |
|---|
| **PCT/JP2024/028301** |

| | |
|---|---|
| **A.** | **CLASSIFICATION OF SUBJECT MATTER** |

*H01B 1/06*(2006.01)i; *C01G 25/00*(2006.01)i; *C01G 35/00*(2006.01)i
FI:   H01B1/06 A; C01G25/00; C01G35/00 C

According to International Patent Classification (IPC) or to both national classification and IPC

| | |
|---|---|
| **B.** | **FIELDS SEARCHED** |

Minimum documentation searched (classification system followed by classification symbols)

H01B1/06; C01G25/00; C01G35/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2021/024785 A1 (TDK CORPORATION) 11 February 2021 (2021-02-11) entire text, all drawings | 1-6 |

☐ Further documents are listed in the continuation of Box C.      ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

| Patent document cited in search report | Publication date (day/month/year) | Patent family member(s) | Publication date (day/month/year) |
|---|---|---|---|
| WO 2021/024785 A1 | 11 February 2021 | US 2022/0246983 A1 | |

Form PCT/ISA/210 (patent family annex) (July 2022)

**EP 4 749 663 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020070957 A
- WO 2021024876 A
- WO 2021024785 A
- WO 2021024783 A